# EUROPÄISCHE PATENTSCHRIFT

(11) **EP 2 987 766 B1**
(45) Veröffentlichungstag und Bekanntmachung des Hinweises auf die Patenterteilung: **05.04.2017**
(21) Anmeldenummer: 14181645.4
(22) Anmeldetag: 20.08.2014
(51) Int. Cl.: B67C 3/20, B65B 3/02

(54) **Füllhöhenkorrektur**
Fill height correction
Correction de hauteur de remplissage

(43) Veröffentlichungstag der Anmeldung: 24.02.2016
(73) Patentinhaber: Krones AG, 93073 Neutraubling (DE)
(72) Erfinder: Auburger, Michael, 93073 Neutraubling (DE)
(74) Vertreter: Grünecker Patent- und Rechtsanwälte PartG mbB

(56) Entgegenhaltungen:
- WO-A1-2010/018139
- WO-A1-2012/104018
- GB-A- 2 178 015

## Beschreibung

Die Erfindung betrifft eine Formfüllmaschine und ein Verfahren zum Ausformen und Füllen von Kunststoffbehältern gemäß den Oberbegriffen der Ansprüche 1 und 7. Eine gattungsgemäße Vorrichtung und ein gattungsgemäßes Verfahren sind aus der WO 2012/104018 A1 bekannt.

Bekannterweise lassen sich Kunststoffbehälter im Streckblasverfahren aus Vorformlingen herstellen. Insbesondere handelt es sich bei den Kunststoffbehältern vor dem Expandieren um Vorformlinge, die bevorzugt die Form eines Reagenzglases aufweisen bzw. eine einzige Öffnung aufweisen. In der Nähe dieser Öffnung befindet sich ein Mündungsbereich, welcher beispielsweise mit einem schon im Spritzgussverfahren angeformten Gewinde für einen Verschluss versehen wurde. Zusätzlich kann im Mündungsbereich ein Tragring vorgesehen sein, welcher zum Transport vorgesehen ist.

Es gibt auch bereits Verfahren, bei denen PET-Vorformlinge mittels hydraulischem Druckverfahren hergestellt werden.

Dabei sind im Grunde zwei Wege bekannt, nämlich, dass die Verformung mit dem Produkt stattfindet, welches am Ende im Behälter verbleibt oder dass eine Flüssigkeit verwendet wird, die nach dem Verformungsvorgang wieder aus dem Behälter entfernt wird.

Aus der EP 1529620 B1 ist solch ein Verfahren zum hydraulischen Umformen von Vorformlingen zu Kunststoffflaschen beschrieben. Zu diesem Zweck werden die Vorformlinge zuerst erwärmt, in eine Hohlform verbracht und dort in Längsrichtung gereckt. Es wird ferner karbonisiertes Fluid, insbesondere mit Mineralwasser oder dergleichen unter Überdruck eingeleitet, um die endgültige Behälterform herzustellen. Das Mineralwasser verbleibt im Behälter, so dass ein nachfolgender separater Abfüllschritt entbehrlich ist.

Die US 2011/0031659 A1 beschreibt ferner ein Verfahren, bei dem ein erwärmter Vorformling mittels einer Reckstange gereckt und anschließend mittels eines inkompressiblen Fluids, insbesondere Wasser, hydraulisch zu einem Behälter geweitet wird. Dadurch wird das Fluid durch Pressluft verdrängt und läuft aus dem Behälter ab.

So ist es also bereits möglich, den in der Formfüllmaschine erzeugten Kunststoffbehälter bereits in der Behandlungsstation der Formfüllmaschine mit dem Endprodukt zu füllen. Dies bringt jedoch den Nachteil mit sich, dass beim Transport der gefüllten Kunststoffbehälter Produkt aus dem Kunststoffbehälter überschwappt und die Maschine verschmutzt. Dies erzeugt einen erhöhten Reinigungsaufwand. Außerdem kann durch das Überschwappen keine einheitliche Optik und konstante Füllhöhe realisiert werden, dies liegt unter anderem auch daran dass die Behälter beim Ausformen und und nach dem Füllen noch heiß sind, so dass es zu Schwankungen der Behältervolumina kommen kann. Aufgrund des Überschwappens kann es zu einer Unterfüllung des Behälters kommen, die jedoch dringend vermieden werden muss, da, wenn die Kunststoffbehälter die gesetzlich vorgeschriebene Mindestfüllmenge nicht erreichen, diese nicht mehr verkauft werden dürfen.

Hiervon ausgehend liegt der vorliegenden Erfindung die Aufgabe zugrunde, eine Formfüllmaschine sowie ein entsprechendes Verfahren bereitzustellen, die ein Unterfüllen verhindern können und darüber hinaus dazu beitragen können, die Hygiene in einer Formfüllmaschine zu verbessern.

Erfindungsgemäß wird diese Aufgabe durch die Merkmale der Ansprüche 1 und 7 gelöst.

Den Behandlungsstationen, beispielsweise einem Rundläufer mit entsprechenden Behandlungsstationen, ist mindestens eine Nachfülleinrichtung nachgeschaltet zum Zudosieren von Produkt in die jeweils bereits gefüllten Kunststoffbehälter.

Das bedeutet, dass es möglich ist, die Kunststoffbehälter, z.B. Flaschen, insbesondere PET-Flaschen in den jeweiligen Behandlungsstationen nicht bis zur einer Mindestfüllhöhe, die einem gesetzlich vorgeschrieben Mindestvolumen entspricht, damit das Produkt verkauft werden darf, zu füllen, sondern entsprechend weniger einzufüllen, derart, dass ein Überschwappen beim Transport der gefüllten Kunststoffbehälter in der Formfüllmaschine wirksam vermieden werden kann. Die Nachfülleinrichtung kann dann damit die entsprechende Mindestfüllhöhe erreicht wird, Produkt zudosieren. Selbst wenn Produkt aus den Kunststoffbehältern überschwappt, kann mit Hilfe einer entsprechenden Nachfülleinrichtung Produkt zudosiert werden.

Die Maschine weist erfingdungsgemäß mindestens einen Füllstandssensor zur Füllstandskontrolle auf, sowie eine Steuer/Regeleinrichtung (Steuer oder Regeleinrichtung), die die Nachfülleinrichtung in Abhängigkeit eines Signals des Füllstandssensors ansteuert oder regelt. Mit dem Füllstandssensor kann also bestimmt werden, ob die Mindestfüllhöhe bereits erreicht ist. Ist die Füllhöhe nicht erreicht, gibt die Regeleinrichtung ein Signal an die Nachfülleinrichtung derart, dass Produkt nachdosiert wird. Wenn ein ausreichender Füllstand gemessen wird, wird der Nachfüllvorgang beendet wird. Vorteilhafterweise regelt die Steuer/Regeleinrichtung als Regelgröße also die Füllhöhe. Wenn die Füllhöhe auf eine vorbestimmte Füllhöhe geregelt wird, kann nicht nur Unterfüllen verhindert werden sondern es ergibt sich auch eine einheitliche Optik der Flaschen, egal wie maßhaltig die Behälter durch den Prozess geformt werden.

Es ist aber auch möglich, die Nachfülleinrichtung einfach anzusteuern, indem beispielsweise, wenn bestimmt wird, dass die Mindestfüllhöhe unterschritten wird, ein empirisch bestimmtes Volumen zudosiert wird, das sicherstellt, dass die Mindesthöhe erreicht wird oder aber es kann eine entsprechende Menge in Abhängigkeit der gemessenen Höhe berechnet werden, die dann durch die Nachfülleinrichtung zudosiert wird.

Die Nachfülleinrichtung wird also derart angesteuert oder geregelt, dass eine Menge zudosiert wird, damit eine vorbestimmte Füllhöhe in dem Kunststoffbehälter nicht unterschritten wird. Somit ist sichergestellt, dass jeder erzeugte Kunststoffbehälter verkauft werden darf. Überbefüllte Behälter dürfen ebenfalls verkauft werden.

Gemäß einer bevorzugten Ausführungsform werden mehrere Nachfülleinrichtungen, insbesondere jeweils zusammen mit entsprechenden Füllstandssensoren in einem Karussell, sprich einem Rundläufer, angeordnet. Dies macht eine kontinuierliche Produktion möglich.

Der mindestens einen Nachfülleinrichtung bzw. dem Karussell oder Rundläufer ist mindestens ein Verschließer nachgeordnet, um die korrekt befüllten Kunststoffbehälter dann abschließend zu verschließen.

Die Nachfülleinrichtung weist eine Halterung für die Kunststoffbehälter auf, wobei der Füllstandssensor vorteilhafterweise seitlich oder oberhalb eines Bereiches, in dem der Kunststoffbehälter angeordnet werden kann, montiert ist. Somit kann der Füllstand beispielsweise optisch von der Seite oder von oben kontrolliert werden.

Bei dem entsprechenden Verfahren wird in die gefüllten Kunststoffbehälter nach Verlassen der jeweiligen Hohlform durch eine Nachfülleinrichtung Produkt zudosiert.

Die jeweiligen gefüllten Kunststoffbehälter weisen nach Verlassen der Hohlform eine erste Füllhöhe h₁ auf und die Nachfülleinrichtung füllt dann, wenn die erste Füllhöhe h₁ eine zweite Füllhöhe h₂, (die beispielsweise der Mindestfüllhöhe entspricht oder größer als die Mindestfüllhöhe ist, wobei die Mindestfüllhöhe einer Füllhöhe entspricht die dem vorgeschriebenen Mindestvolumen entspricht, damit der Behälter verkauft werden darf), unterschreitet, den Kunststoffbehälter auf mindestens die zweite Füllhöhe h₂ auffüllt. Vorzugsweise füllt die Nachfülleinrichtung exakt auf die Füllhöhe h₂ auf, die der erforderlichen Mindestfüllhöhe entspricht. Es ist natürlich auch möglich, die Flasche leicht zu überfüllen, jedoch nicht so weit, dass die Flasche überläuft.

Das bedeutet, dass vorteilhafterweise in einer entsprechenden Regelung das Füllstandssensor als Meßglied eine Füllhöhe misst, und die Nachfülleinrichtung als Stellglied so viel Produkt nachdosiert, bis die Regelgröße h mindestens den Sollwert h₂ bzw. den Sollwert h2 erreicht hat.

Es ist vorteilhaft, wenn das Füllstandssensor auf einer Höhe angeordnet ist, die dem zweiten Füllstand h₂ entspricht und ein entsprechendes Signal erzeugt, wenn der Füllstand diese Höhe aufweist bzw. erreicht. Entsprechendes ist sehr einfach zu realisieren, wenn ein entsprechender Füllstandssensor auf eine entsprechende Höhe h₂ angeordnet wird.

Es ist jedoch auch möglich, dass das Füllstandssensor die Werte für die unterschiedlichen Füllhöhen bestimmen kann. Können die jeweiligen absoluten Meßwerte für den Füllstand bestimmt werden, so kann auf der Grundlage der bestimmten Höhe mit der der Kunststoffbehälter in der Hohlform gefüllt wurde, berechnet werden, wie viel Produkt noch zudosiert werden muss oder aber auch der Nachdosiervorgang gestoppt werden, wenn ein bestimmter Wert erreicht ist.

In der Hohlform wird der Kunststoffbehälter auf eine Höhe h₁ befüllt, wobei die Mindestfüllhöhe der fertig gefüllten Kunststoffbehälter mindestens h₂ beträgt, wobei gilt: h₁ < h₂. Das in der Hohlform abgefüllte Volumen V₁ ist größer V₂, wobei V₂ das durch die Nachfülleinrichtung zudosierte Volumen ist, wobei vorzugsweise gilt, dass V₂ = 2 bis 10 % (V1 + V₂) vorzugsweise, V₂ = 2 bis 5 % (V1 + V₂). Somit ist es möglich in der füllformmaschine gleich entsprechend wenig abzufüllen, so dass ein Überschwappen verhindert werden kann.

Anstatt in einer im Stand der Technik bekannten von der Streckblasmaschine entkoppelten Spritzgussmaschine können die Vorformlinge auch direkt von einer stromaufwärts angeordneten Spritzgussvorrichtung erzeugt und im noch aufgewärmten Zustand weiter an die Form- und Füllvorrichtung weitertransportiert werden. Energetisch gesehen bietet das den Vorteil, dass ein Teil der Wärme nicht an die Umgebung verloren geht. U.U. muss jedoch noch eine Zwischenkonditioniereinrichtung vorgesehen werden, welche die Vorformlinge nur geringfügig temperiert (kleiner als plus oder minus 50°C) bzw. ein Temperaturprofil aufbringt. Werden die Vorformlinge innerhalb eines Reinraums spritzgegossen, so ist u.U. keine weitere Sterilisation dieser nötig, wenn sich der Reinraum bis zu einer Position hin erstreckt, an der ein Verschluss auf den Behälter nach dem Befüllen aufgebracht wird.

Insbesondere findet die Herstellung bzw. Expansion und das Befüllen sowie auch das Nachdosieren und das Verschließen der Behälter innerhalb eines Raums mit kontaminationsarmer Umgebung transportiert. Die kontaminationsarme Umgebung, bei der es sich insbesondere um einen Reinraum handelt, kann durch eine oder Kombinationen der folgenden Maßnahmen hergestellt werden:
- Die kontaminationsarme Umgebung der Vorrichtung (innerhalb eines Maschinenschutzes) wird unter einen Überdruck im Vergleich zur Umgebungsatmosphäre gesetzt, indem durch Feinfilter filtrierte Luft zumindest während der Produktion in den Raum eingeblasen wird
- Die Antriebe für verschiedenste Bewegungen der Kavität sind außerhalb des Reinraums angeordnet, so beispielsweise die Antriebe für das Öffnen und Schließen der Kavität (Form) und/oder die für das Bewegen einer Reckstange und/oder die für ein Anheben oder senken eines Behälters und/oder die die Bewegung einer Blas- oder Fülldüse
- Die innere Wandung des Raums wird in regelmäßigen Abständen gereinigt und/oder sterilisiert, beispielsweise über ein Bespritzen oder Bedampfen mit Lauge, Säure, Entkeimungsflüssigkeit, Wasserstoffperoxid (gasförmig oder flüssig). Insbesondere werden bei der Reinigung und/oder Sterilisation die Innen- und Außenseiten der Kavitäten, Blas- oder Fülldüsen und der Reckstangen miteinbezogen. Insbesondere werden aber auch die inneren Wandungen des Maschinenschutzes einbezogen.
- Die kontaminationsarme Umgebung wird gegen die Umgebungsatmosphäre abgedichtet. Bei einem Rundläufer kann es sich bei der Dichtung um ein Wasserschloss oder eine Gummidichtung handeln, welche(s) den drehenden Teil zum stehenden Teil der Vorrichtung abdichtet.

Insbesondere werden die Behälter bzw. Vorformlinge vor einem Einbringen in die kontaminationsarme Umgebung sterilisiert.

Weitere Merkmale und beispielshafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.

Die nachfolgende Erfindung wird unter Bezugnahme der folgenden Figuren näher erläutert.
- Fig. 1: zeigt grob schematisch eine Aufsicht auf eine Formfüllmaschine gemäß der vorliegenden Erfindung.
- Fig. 2: zeigt einen Längsschnitt durch eine Behandlungsstation zum Formen und Füllen eines Kunststoffbehälters.
- Fig. 3a: zeigt ein Diagramm, in dem die Signalhöhe des Füllstandssensors in Abhängigkeit der Zeit aufgetragen ist.
- Fig. 3b: zeigt ein Diagramm, in dem die Füllstandshöhe in Abhängigkeit der Zeit aufgetragen ist.
- Fig. 3c: zeigt ein Diagramm, in dem die Signalhöhe der Regeleinrichtung an die Nachfülleinrichtung in Abhängigkeit der Zeit aufgetragen ist.
- Fig. 4: zeigt grob schematisch den Aufbau einer Nachfülleinrichtung mit einem Füllstandssensor.
- Fig. 5: zeigt grob schematisch eine weitere Ausführungsform für einen Füllstandssensor gemäß der vorliegenden Erfindung.
- Fig. 6: grob schematisch eine weitere Ausführungsform für einen Füllstandssensor gemäß der vorliegenden Erfindung
- Fig. 7: zeigt grob schematisch einen Regelkreis gemäß der vorliegenden Erfindung.
- Fig. 8: zeigt grob schematisch ein Blockschaltbild für ein erfindungsgemäßes Verfahren.
- Fig. 9: zeigt grob schematisch ein Blockschaltbild für ein weiteres Verfahren zur Füllstandskorrektur gemäß der vorliegenden Erfindung.
- Fig. 10: zeigt ein weiteres Verfahren für eine Füllstandskorrektur gemäß der vorliegenden Erfindung.

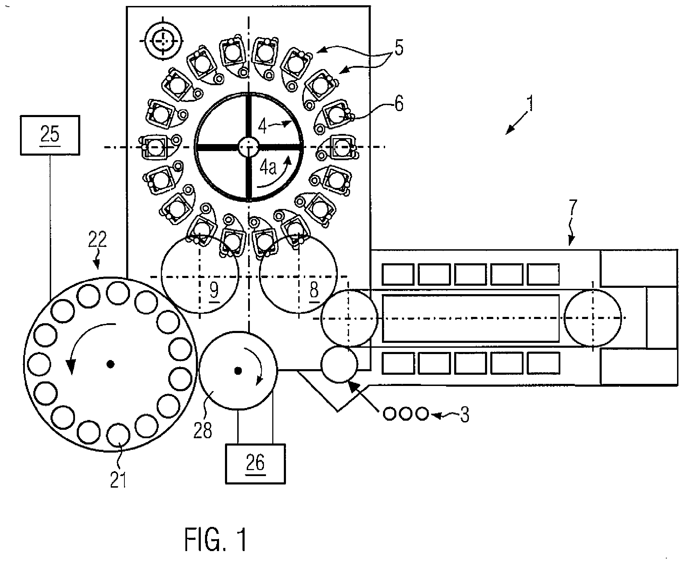

Fig. 1 zeigt grob schematisch eine Aufsicht auf eine Formfüllmaschine, die geeignet ist zum Durchführen des erfindungsgemäßen Verfahrens. Die Formfüllmaschine weist eine Zuführung für Vorformlinge 3 auf, sowie vorzugsweise einen Ofen 7, in dem die Vorformlinge beispielsweise mittels Infrarotstrahlung oder Mikrowelle auf eine Temperatur von 80-110°C erhitzt werden. Während es sich beim Mikrowellenofen bevorzugt um einen Rundläufer handelt, werden die Vorformlinge beim Infrarotofen zumindest einen Teil der Strecke geradlinig transportiert. Weiter weist die Formfüllmaschine einen Einlaufstern 8, sowie ein Karussell 4 auf. Die Maschine ist als Rundläufer, insbesondere als Rad, ausgebildet und kann verschiedene Stationen aufweisen. Mit 5 sind die jeweiligen Behandlungsstationen bezeichnet, die jeweils eine Hohlform 6 umfassen, zum hydraulischen Ausformen der Vorformlinge 3. Insbesondere ist eine Vielzahl von Form- und Füllstationen vorgesehen, welche insbesondere am Außenumfang eines sich kontinuierlich drehenden Rundläufers angeordnet sind. Der Rundläufer dreht sich insbesondere um eine vertikale Achse, deren Verlängerung den Erdmittelpunkt schneidet.

Insbesondere sind die Stationen alle in äquidistanten Abständen zueinander angeordnet. Die Stationen weisen insbesondere Kavitäten auf, innerhalb derer die Behälter gegen die inneren Wände der Kavität expandiert werden, so dass die fertig ausgeformten Behälter die (negative) Form der inneren Wände der Kavität erhalten.
Die Maschine weist weiter einen Auslaufstern 9 auf sowie eine Transporteinrichtung, über die die fertigen Behälter 2 abtransportiert werden können. Es kann gemäß der vorliegenden Erfindung zusätzlich eine Herstellungseinrichtung der Vorformlinge (nicht dargestellt) sowie eine Verschließeinrichtung 26 für die Vorformlinge vorgesehen sein. Der grundlegende Aufbau entspricht dem Aufbau von Streckblasmaschinen, wobei jedoch, gemäß der vorliegenden Erfindung, der Vorformling unter anderem hydraulisch, d. h., mit einem nicht kompressiblen Fluid unter Druck (z. B. unter 3 bis 25bar), ausgeformt werden kann und gleichzeitig in der Hohlform 6 gefüllt werden kann.

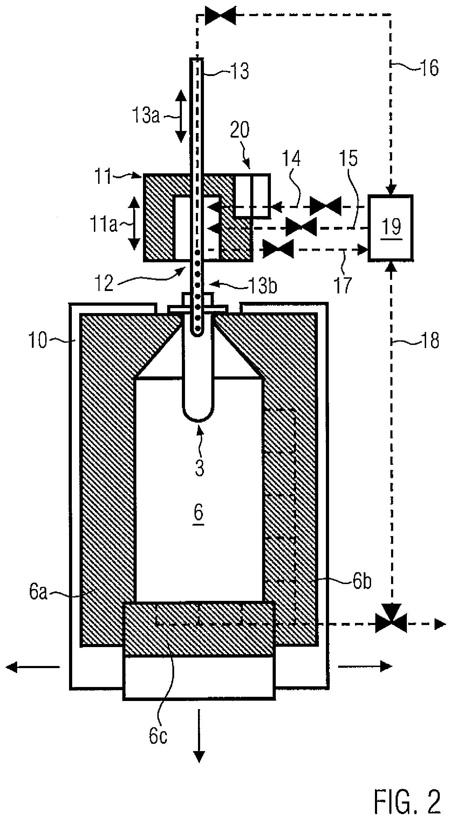

Fig. 2 zeigt grob schematisch eine Behandlungsstation 5, wobei die Hohlform 6 beispielsweise aus zwei gegenüberliegenden Formteilen 6a,b und einem Bodenteil 6c gebildet ist, wobei die Teile 6a,b auseinander geschwenkt werden können. Die Vorrichtung weist weiter einen axial bewegbaren Ventilkopf 11 auf, der in Richtung 11 a auf und ab bewegbar ist, und auf das Mundstück des Vorformlings 3 und/oder auf die beiden Formteile 6a,b dicht aufgesetzt werden kann, derart, dass dann über eine Blasdüse, hier: Fluiddüse 12, Fluid in den Vorformling 3 zum Ausformen über das Mundstück eingebracht werden kann. Über eine axial bewegliche Reckstange 13 kann zusätzlich Druck auf den Vorformling 3 in Axialrichtung angelegt werden, um den Vorformling 3 in Axialrichtung zu verspannen. Die Reckstange 13 ist hier hohlförmig ausgebildet und weist zumindest eine Öffnung 13b zum Absaugen des Formfluids oder aber zur Versorgung mit Formfluid auf. Die Fluiddüse 12 ist mit Zuleitungen 14, 15 für Formfluid oder Produkt verbunden sowie beispielsweise einer pneumatischen Absaugleitung 17, zum Beispiel für den Innenraum, des Behälters beim Füllen. Über eine pneumatische Absaugleitung 18 kann ein bestimmter Unterdruck in der Hohlform erzeugt werden, so dass, beispielsweise bei Füllen unter Unterdruck in den Kunststoffbehälter, ein Kollabieren des Kunststoffbehälters verhindert werden kann. Mit 19 ist ein Medienverteiler bezeichnet. Mit 20 ist ein Kompressor für das Formfluid bezeichnet.

In Fig. 2 ist die Behandlungsstation 5 derart ausgebildet, dass der Vorformling 3 durch einen offenen Bereich in der Behältermündung über die Fluiddüse 12 befüllt wird. Es ist jedoch auch möglich, dass bei herabgefahrenem Ventilkopf über die Reckstange 13 oder ein entsprechendes Füllrohr der Vorformling 3 mit inkompressiblem Fluid zum Ausformen des Kunststoffbehälters gefüllt wird. Dieses Fluid kann gleichzeitig das Endprodukt sein. Es ist jedoch auch möglich, dieses Fluid, nachdem der Kunststoffbehälter ausgeformt wurde, wieder abzusaugen und dann den Behälter 2 mit Produkt zu füllen, beispielsweise durch das Füllrohr bzw. die Reckstange 13.

Gemäß der Erfindung werden die Kunststoffbehältnisse also bereits in der Formfüllmaschine in den Hohlformen der Behandlungsstationen gefüllt, so dass die Kunststoffbehälter die Formfüllmaschine in gefülltem Zustand verlassen.

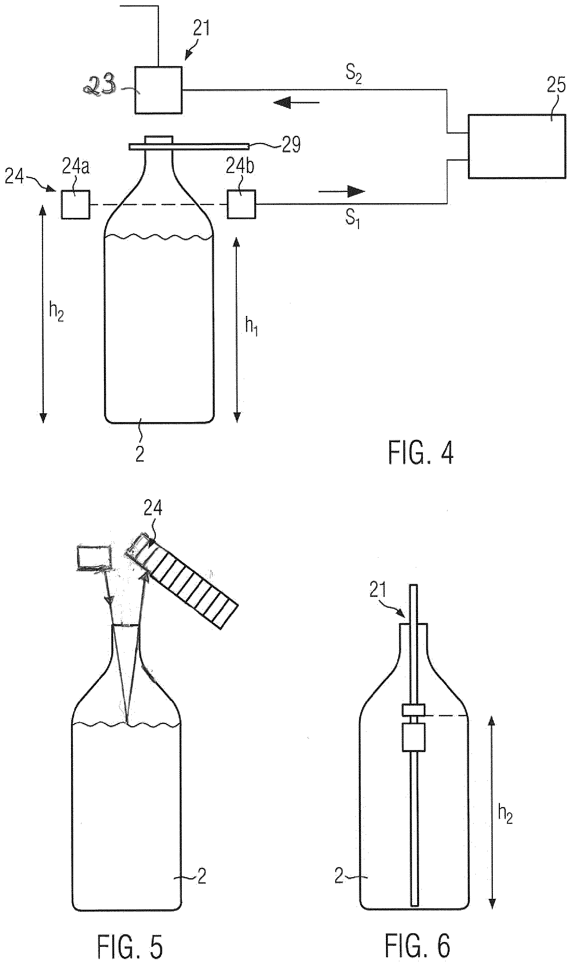

In Produktionsrichtung nach der eigentlichen Formfüllmaschine 1, d.h. nach den Behandlungsstationen 5, sind Nachfülleinrichtungen 21 (Fig.1) hier in Form eines Rundläufers bzw. Karussells 22 vorgesehen. Die Flaschen können so von dem Karussell 4, beispielsweise über den Auslaufstern 9 an die Nachfülleinrichtungen 21 weitergegeben werden. Die Nachfülleinrichtungen 21 umfassen dabei in bekannter Weise entsprechende Fülldüsen 23 (siehe Fig. 4) zum Nachfüllen der Kunststoffbehälter 2 mit Produkt, auf die hier nicht näher eingegangen wird. Den Nachfülleinrichtungen 21 sind jeweils entsprechende Füllstandssensoren 24 (siehe auch z.B. Fig. 4) zugeordnet. Die Füllstandssensoren sowie die Nachfülleinrichtungen sind jeweils mit einer in Fig. 4 dargestellten Steuer/Regeleinrichtung 25 verbunden. Wie grob schematisch dargestellt ist, ist nach der Nachfülleinrichtung ein Verschließer 26 angeordnet. Dieser kann beispielsweise nach einem weiteren Auslaufstern 28 angeordnet sein, oder direkt im Anschluss an die Nachfülleinrichtungen 21 bzw. den Rundläufer 22 oder aber auch in dem Rundläufer bzw. Karussell 22 integriert sein. Wesentlich ist lediglich, dass der Kunststoffbehälter nach dem Nachdosieren von Produkt verschlossen werden kann.

Bei der Herstellung von Kunststoffbehältern, die in den Behandlungsstationen einer Formfüllmaschine 1 insbesondere durch Einleiten von inkompressiblem Fluid, ausgeformt und in dieser Behandlungsstation gefüllt werden, kommt es dazu, dass durch den schnellen Transport Produkt aus den Kunststoffbehältern 2 schwappt. Dies bringt den Nachteil mit sich, dass es zu Verunreinigungen in der Formfüllmaschine kommt und dass darüber hinaus eine Unterfüllung der Kunststoffbehälter Flaschen nicht wirklich verhindert werden kann.

Aus diesem Grund kann Endprodukt, in die Kunststoffbehälter 2 über die Nachfülleinrichtungen 21 nachdosiert werden.

Fig. 4 zeigt grob schematisch eine Nachfülleinrichtung 21. Die Nachfülleinrichtung 21 weist beispielsweise eine Fülldüse 23 auf, über die der Kunststoffbehälter 2 in bekannter Weise befüllt werden kann. Der Kunststoffbehälter 2 kann beispielsweise an seinem Flansch über eine Halterung 29 festgehalten werden. Die Füllstandsmessung erfolgt vorteilhafterweise seitlich oder von oben. In Fig. 4 ist ein Füllstandssensor 24 vorgesehen, der seitlich in einem Bereich, in dem der Kunststoffbehälter 2 angeordnet ist, montiert ist. Dieser Füllstandssensor ist beispielsweise ein optischer Sensor, der ein optisches Signal über einen Sender 24a ausgibt, und am Empfänger 24b ein Signal empfängt, das unterschiedlich ist, wenn Produkt in diesem Bereich vorhanden ist, oder wenn kein Produkt vorhanden ist. Eine entsprechende Meßmethode ist nur ein Beispiel. Es sind diverse Meßverfahren zur Füllstandskontrolle geeignet. Beispielsweise kann auch, wie in Fig. 5 grob schematisch dargestellt ist, ein Füllstand durch eine Messung von oben in den Flaschenhals hinein beispielsweise mittels Lasertriangulation bestimmt werden, wobei der Abstand vom Sensor zur Flüssigkeitsoberfläche bestimmt werden kann, wodurch sich die Höhe h bzw. der Füllstand ergibt. Aber auch Leitfähigkeitsmessungen mittels Sonde, wie grob schematisch in Fig. 6 dargestellt sind möglich, wobei beispielsweise ein Elektrodenpaar an einer länglichen Sonde, die in den Behälter eintaucht, angeordnet ist, und sobald ein bestimmter Füllstand erreicht ist, Strom zwischen den Elektroden fließt.

Der Füllstandssensor kann zwar so ausgebildet sein, dass er die absolute Höhe des Füllstands bestimmt, es reicht jedoch aus, wenn der Füllstandssensor 24 bestimmen kann, ob der Füllstand eine gewisse Höhe bzw. mindestens eine gewisse Höhe aufweist. Dazu ist beispielsweise in Fig. 4 der Sensor auf der Mindestfüllhöhe h₂ angeordnet. Eine manuell oder motorisch bedienbare Höhenverstellung des Sensors erlaubt vorteilhafterweise die manuelle oder automatische Verstellung der Mindestfüllhöhe h2 beim Behälterwechsel für unterschiedliche Behältergrößen und Volumina (nicht gezeigt).

Der jeweilige Sensor ist, wie z.B. aus Fig. 4 hervorgeht, über eine Signalleitung mit der Steuer/Regeleinrichtung 25 verbunden und sendet ein entsprechendes Meßsignal S1 zur Steuer/Regeleinrichtung 25. In Abhängigkeit von diesem Signal sendet die Steuer/Regeleinrichtung ein Signal S2 an die Nachfülleinrichtung 21, die dann Produkt über die Fülldüse 23 in den Kunststoffbehälter 2 nachdosiert.

Vorteilhafterweise wird die Füllhöhe auf eine Höhe h2 geregelt. Die Regelung auf eine bestimmte Höhe h₂ bringt nicht nur den Vorteil mit sich, dass die gesetzlich geforderte Mindestfüllmenge auf jeden Fall erreicht wird, sondern bringt auch den Vorteil mit sich, dass eine einheitliche Optik der Flaschen mit konstanter Füllhöhe gegeben ist, egal, wie maßhaltig die Behälter durch den Prozess geformt werden.

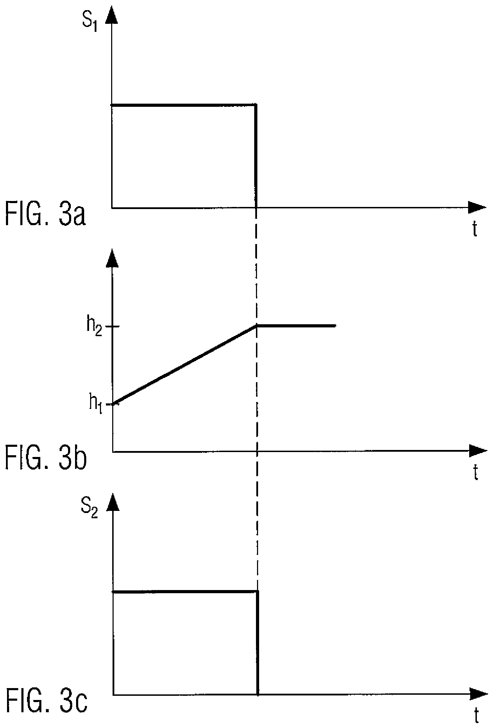

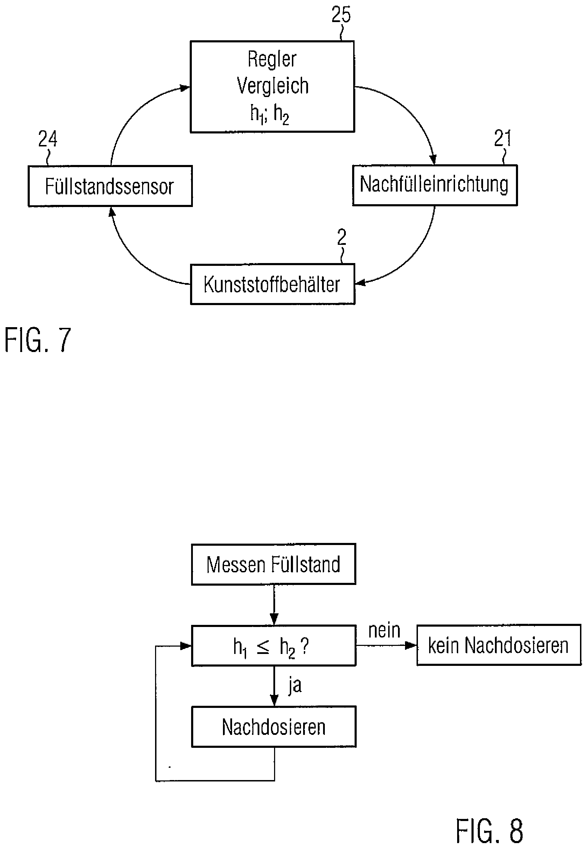

Fig. 7 zeigt einen entsprechenden Regelkreis mit einem Regler 25 der den Meßwert h₁ bzw. das entsprechende Meßsignal S1 mit einem Sollwert h₂ vergleicht. Als Stellglied ist die Nachfülleinrichtung 21 vorgesehen, die in Abhängigkeit des Messwertes s1 eine entsprechende Menge in dem Kunststoffbehälter 2 nachdosiert. Ein Füllstandssensor 24 als Meßglied kann den Füllstand im Kunststoffbehälter 2 erfassen oder zumindest erfassen, ob der Sollfüllstand h2 bereits erreicht ist oder nicht. Fig. 8 zeigt ein Blockschaltbild für eine entsprechende Regelung. Die Kunststoffbehälter 2 wurden über die Formfüllmaschine mit Produkt gefüllt und weisen eine Füllhöhe h₁ auf. Der Füllstandssensor 24 erfasst, ob h₁ kleiner ist als h₂. In der Regel wird h₁ kleiner als H₂ sein, da entweder Produkt übergeschwappt ist oder aber vorteilhafterweise die Höhe h₁ bereits vorab niedriger als h₂ gewählt wurde, um Kontamination in der Formfüllmaschine zu verhindern. Eine relativ niedrige Füllhöhe h₁ kann erzielt werden, wenn beispielsweise eine Reckstange 13, die beim mechanischen Ausformen und Füllen in den auszuformenden Kunststoffbehälter eintaucht, ein möglichst großes Volumen aufweist, derart, dass bei Herausziehen der Reckstange nach dem Füllen ein großes Kopfvolumen verbleibt. Es wird also bestimmt, dass h₁ kleiner als h₂ ist, wie beispielsweise auch in Fig. 3b dargestellt ist, die die Füllhöhe in Abhängigkeit der Zeit darstellt. Der Füllstandssensor 24 schickt dann, wie aus Fig. 3a hervorgeht, ein entsprechendes Signal s1 an die Steuer/Regeleinrichtung 25. Die Steuer/Regeleinrichtung schickt ein Signal S2, wie aus Fig. 3c hervorgeht, die ebenfalls ein Signalzeitdiagramm ist, an die Nachfülleinrichtung 21. Der Füllstand in dem Kunststoffbehälter 2 steigt dabei kontinuierlich an. Hat der Füllstand beispielsweise die Höhe des Sensors 24, bzw. den Füllstand h₂ erreicht, ändert sich das Signal S1 entsprechend und die Steuer/Regeleinrichtung schickt ein entsprechendes Signal S2 an die Nachfülleinrichtung 21, die dann den Füllvorgang stoppt.

Die Regelung auf eine bestimmte Höhe ist besonders zu bevorzugen.

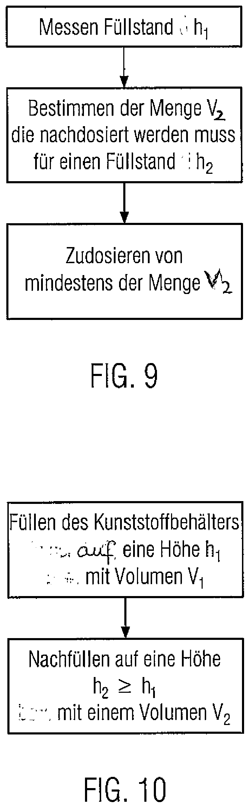

Es ist jedoch auch möglich, eine Füllstandskorrektur auf andere Art und Weise durchzuführen, wie im Zusammenhang mit Fig. 9 erläutert wird. Dabei wird der Füllstand h₁ gemessen, den der entsprechende Kunststoffbehälter 2 aufweist. Da die Flaschenform und der Sollfüllstand, d.h. die notwendige Mindesthöhe bekannt sind, kann eine Menge bzw. ein bestimmtes Volumen V₂ bestimmt werden bzw. berechnet werden, dass nachdosiert werden muss, um mindestens den Füllstand h₂ zu erhalten. Entsprechende Nachdosierwerte für Werte h1 können auch in der entsprechenden Steuerung/Regelungseinrichtung abgespeichert sein. Eine entsprechende Menge wird dann zudosiert. Es kann auch geringfügig mehr zudosiert werden jedoch nur so viel, dass die Flasche nicht überlaufen kann.

In Fig. 10 ist eine weitere Möglichkeit der Füllstandskorrektur gezeigt. Der Kunststoffbehälter 2 wird in der Formfüllmaschine auf eine Höhe h₁ befüllt. Die Höhe wird bereits vorab so festgelegt, dass z.B. (bei einer normgefüllten nach der deutschen Verordnung für Fertigpackungen 0,5 Liter Flasche mit einem vorgeschriebenen Volumen von mindestens 485ml) V₁ maximal = 485ml ist und(V₁ + V₂) mindestens 485ml beträgt, wobei V₁ die abgefüllte Füllmenge in der Hohlform der Formfüllmaschine ist und V₂ die nachdosierte Füllmenge.

Dann wird über die Nachfülleinrichtung 21 ein entsprechendes Volumen V₂ nachdosiert, derart, dass die Füllhöhe mindestens h₂ beträgt oder das Füllvolumen mindestens dem gesetzlich vorgeschriebenen Mindestfüllvolumen entspricht.

Das in der Hohlform abgefüllte Volumen V₁ ist größer V₂, wobei V₂ das durch die Nachfülleinrichtung zudosierte Volumen ist, wobei vorzugsweise gilt, dass V₂ = 2 bis 10 % (V1 + V₂) vorzugsweise, V₂ = 2 bis 5 % (V1 + V₂). Somit ist es möglich in der Füllformmaschine gleich entsprechend wenig abzufüllen, so dass ein Überschwappen verhindert werden kann.

## Patentansprüche

1. Formfüllmaschine (1) zum Ausformen und Füllen von Kunststoffbehältern (2) mit:
mehreren Behandlungsstationen (5), die jeweils eine Hohlform (6) aufweisen, in der ein Vorformling (3) zu dem Kunststoffbehälter (2) ausgeformt und gefüllt werden kann, **gekennzeichnet durch**
mindestens eine den Behandlungsstationen (5) nachgeschaltete Nachfülleinrichtung (21) zum Zudosieren von Produkt in die jeweiligen bereits gefüllten Kunststoffbehälter (2), wobei die Maschine weiter umfasst:
mindestens einen Füllstandssensor (24) sowie
eine Steuer/Regeleinrichtung (25), die die Nachfülleinrichtung (21) in Abhängigkeit eines Signals (s1) des Füllstandssensors (24) derart ansteuert oder regelt, dass die Steuer/Regeleinrichtung (25) ein Signal an die Nachfülleinrichtung (21) derart gibt, dass Produkt nachdosiert wird, wenn beim Füllstandssensor bestimmt wird, dass die Mindestfüllhöhe nicht erreicht ist.

2. Formfüllmaschine (1) nach Anspruch 1, **dadurch gekennzeichnet, dass** die Steuer/Regeleinrichtung (25) als Regelgröße die Füllhöhe (h) regelt.

3. Formfüllmaschine (1) nach mindestens einem der vorhergehenden Ansprüche, **dadurch gekennzeichnet, dass** die Steuer/Regeleinrichtung (25) die Nachfülleinrichtung (21) derart ansteuert oder regelt, dass eine Menge an Produkt zudosiert wird, damit eine vorbestimmte Füllhöhe (h₂) in dem Kunststoffbehälter (2) nicht unterschritten wird.

4. Formfüllmaschine (1) nach mindestens einem der vorhergehenden Ansprüche, **dadurch gekennzeichnet, dass** mehrere Nachfülleinrichtungen (21), insbesondere jeweils zusammen mit entsprechenden Füllstandssensoren (24) in einem Karussell (22) angeordnet sind.

5. Formfüllmaschine (1) nach mindestens einem der vorhergehenden Ansprüche, **dadurch gekennzeichnet, dass** der mindestens einen Nachfülleinrichtung (21) mindestens ein Verschließer (26) nachgeordnet ist.

6. Formfüllmaschine (1) nach mindestens einem der vorhergehenden Ansprüche, **dadurch gekennzeichnet, dass** die Nachfülleinrichtung (21) eine Halterung für die Kunststoffbehälter (2) umfasst und der jeweilige Füllstandssensor (24) seitlich oder oberhalb eines Bereichs, in dem der entsprechende Kunststoffbehälter angeordnet werden kann, montiert ist.

7. Verfahren zum Ausformen und Füllen von Kunststoffbehältern (2), mit einer Vorrichtung nach mindestens einem der Ansprüche 1 bis 7, wobei ein Vorformling (3) in einer Hohlform (6) einer Behandlungsstation zu dem Kunststoffbehälter (2) ausgeformt und in dieser Hohlform (6) gefüllt wird, **dadurch gekennzeichnet, dass** in die gefüllten Kunststoffbehälter (2) nach Verlassen der jeweiligen Hohlform (6) durch eine Nachfülleinrichtung (21) Produkt zudosiert wird, und
dass die jeweiligen gefüllten Kunststoffbehälter (2) nach Verlassen der Hohlform (6) eine erste Füllhöhe (h₁) aufweisen und die Nachfülleinrichtung (21) dann wenn die erste Füllhöhe (h₁) eine zweite Füllhöhe (h₂) unterschreitet, den Kunststoffbehälter (2) auf mindestens die zweite Füllhöhe (h₂) auffüllt.

8. Verfahren nach Anspruch 7, **dadurch gekennzeichnet, dass** in einer entsprechenden Regelung das Füllstandssensor (24) als Meßglied eine Füllhöhe (h) misst und die Nachfülleinrichtung (21) als Stellglied so viel Produkt nachdosiert, bis die Regelgröße (h) d.h. die Füllhöhe den Sollwert (h₂) erreicht hat.

9. Verfahren nach mindestens einem der vorhergehenden Ansprüche, **dadurch gekennzeichnet, dass** das Füllstandssensor (24) auf einer Höhe (h₂) angeordnet ist, die der zweiten Füllhöhe entspricht und ein entsprechendes Signal (s1) erzeugt wird, wenn der Füllstand diese Höhe aufweist bzw. erreicht oder dass ein Füllstandssensor die Höhewerte der sich ändernden Füllstände misst.

10. Verfahren nach mindestens einem der vorhergehenden Ansprüche, **dadurch gekennzeichnet, dass** in der Hohlform (6) die Kunststoffbehälter (2) auf eine Höhe (h1) gefüllt werden, und die Füllhöhe der fertig gefüllten Kunststoffbehälter mindestens h₂ beträgt, wobei gilt: h1 < h₂.

## Claims

1. Mold filling machine (1) for forming and filling plastic containers (2), comprising:
a plurality of treatment stations (5), each having a hollow mold (6) in which a preform (3) can be formed into the plastic container (2) and filled, **characterized by**
at least one refill device (21) arranged downstream of the treatment stations (6) for dosing product into the respective, already filled plastic containers (2), wherein the machine further comprises:
at least one fill level sensor (24) and
a control/regulating device (25) which controls or regulates the refill device (21) in response to a signal (s1) of the fill level sensor (24) in such a manner that the control/regulating device (25) sends a signal to the refill device (21) in such a manner that product is additionally dosed when it is determined at the fill level sensor that the minimum fill height is not reached.

2. Mold filling machine (1) according to claim 1, **characterized in that** the control/regulating device (25) regulates the fill level (h) as controlled variable.

3. Mold filling machine (1) according to at least one of the preceding claims, **characterized in that** the control/regulating device (25) controls or regulates the refill device (21) in such a manner that an amount of product is dosed so that a predetermined fill level (h₂) is not fallen below in the plastic container (2).

4. Mold filling machine (1) according to at least one of the preceding claims, **characterized in that** a plurality of refill devices (21), particularly each together with corresponding fill level sensors (24), are arranged in a carousel (22).

5. Mold filling machine (1) according to at least one of the preceding claims, **characterized in that** at least one capper (26) is arranged downstream of the at least one refill device (21).

6. Mold filling machine (1) according to at least one of the preceding claims, **characterized in that** the refill device (21) comprises a holder for the plastic container (2) and the respective fill level sensor (24) is mounted at the side of or above an area in which the corresponding plastic container can be arranged.

7. Method for forming and filling plastic containers (2), with an apparatus according to at least one of claims 1 to 7, wherein a preform (3) is formed in a hollow mold (6) of a treatment station into the plastic container (2) and is filled in said hollow mold (6), **characterized in that** a product is dosed by a refill device (21) into the filled plastic container (2) after leaving the respective hollow mold (6), and
that the respective filled plastic containers (2) after leaving the hollow mold (6) have a first fill height (h₁) and the refill device (21) fills the plastic container (2) up to at least the second fill height (h₂) whenever the first fill height (h₁) falls below a second fill height (h₂).

8. Method according to claim 7, **characterized in that** in a corresponding control the fill level sensor (21) as measuring element measures a fill height (h) and the refill device (21) as a controlling element additionally doses so much product until the controlled variable (h), i.e. the fill height, has reached the target value (h₂).

9. Method according to at least one of the preceding claims, **characterized in that** the fill level sensor (24) is arranged at a height (h₂) that corresponds to the second fill height and a corresponding signal (s1) is generated when the fill level has or reaches said height or that a fill level sensor measures the height values of the changing fill levels.

10. Method according to at least one of the preceding claims, **characterized in that** in the hollow mold (6) the plastic containers (2) are filled up to a height (h₁), and the fill height of the completely filled plastic containers is at least h₂, where h₁ < h₂.

## Revendications

1. Machine de formage et de remplissage (1) pour assurer le moulage par formage et le remplissage de contenants (2) en matière plastique, comprenant :
plusieurs postes de traitement (5), qui présentent chacun un moule creux (6) dans lequel une préforme (3) est mise en forme pour réaliser le contenant (2) en matière plastique, et peut être remplie,
**caractérisée par**
au moins un dispositif de remplissage de complément (21) placé en aval des postes de traitement (5) et destiné à assurer une addition dosée de produit dans les contenants (2) en matière plastique déjà remplis, la machine comprenant en outre :
au moins un détecteur de niveau de remplissage (24), ainsi qu'un dispositif de commande/de régulation (25), qui commande et/ou régule le dispositif de remplissage de complément (21) en fonction d'un signal (s1) du détecteur de niveau de remplissage (24) de façon telle, que le dispositif de commande/de régulation (25) délivre un signal au dispositif de remplissage de complément (21) de manière à produire une addition dosée de produit lorsque le détecteur de niveau de remplissage détermine que la hauteur de remplissage minimum n'a pas été atteinte.

2. Machine de formage et de remplissage (1) selon la revendication 1, **caractérisée en ce que** le dispositif de commande/de régulation (25) régule la hauteur de remplissage (h) en guise de grandeur réglée.

3. Machine de formage et de remplissage (1) selon l'une au moins des revendications précédentes, **caractérisée en ce que** le dispositif de commande/de régulation (25) commande ou régule le dispositif de remplissage de complément (21) de façon telle que soit additionnée de manière dosée une quantité de produit permettant de ne pas se trouver en-dessous d'une hauteur de remplissage (h₂) prédéterminée dans le contenant (2) en matière plastique.

4. Machine de formage et de remplissage (1) selon l'une au moins des revendications précédentes, **caractérisée en ce que** plusieurs dispositifs de remplissage de complément (21), notamment respectivement en commun avec des détecteurs de niveau de remplissage (24) correspondants, sont agencés dans un carrousel (22).

5. Machine de formage et de remplissage (1) selon l'une au moins des revendications précédentes, **caractérisée en ce qu'**au dit au moins un dispositif de remplissage de complément (21) succède au moins un dispositif de fermeture (26).

6. Machine de formage et de remplissage (1) selon l'une au moins des revendications précédentes, **caractérisée en ce que** le dispositif de remplissage de complément (21) comporte un système de maintien pour les contenants (2) en matière plastique, et le détecteur de niveau de remplissage (24) respectif est monté latéralement ou au-dessus d'une zone dans laquelle peut être agencé le contenant en matière plastique correspondant.

7. Procédé pour assurer le moulage par formage et le remplissage de contenants (2) en matière plastique, à l'aide d'un dispositif selon l'une au moins des revendications 1 à 7, une préforme (3) étant mise en forme dans un moule creux (6) d'un poste de traitement en réalisant ainsi le contenant (2) en matière plastique, qui est rempli dans ce moule creux (6), **caractérisé en ce que** dans les contenants (2) en matière plastique remplis, après qu'ils aient quitté le moule creux (6) respectif, est additionné du produit, de manière dosée, par un dispositif de remplissage de complément (21), et **en ce que** les contenants (2) en matière plastique respectivement remplis, après avoir quitté le moule creux (6), présentent une première hauteur de remplissage (h₁), et le dispositif de remplissage de complément (21), lorsque la première hauteur de remplissage (h₁) est inférieure à une deuxième hauteur de remplissage (h₂), continue le remplissage du contenant (2) en matière plastique, au moins jusqu'à atteindre la deuxième hauteur de remplissage (h₂).

8. Procédé selon la revendication 7, **caractérisé en ce que** lors d'une régulation appropriée, le détecteur de niveau de remplissage (24), en tant qu'organe de mesure, mesure une hauteur de remplissage (h), et le dispositif de remplissage de complément (21), en tant qu'organe de réglage, additionne de manière dosée autant de produit que nécessaire pour que la grandeur réglée (h), c'est-à-dire la hauteur de remplissage, atteigne la valeur de consigne (h₂).

9. Procédé selon l'une au moins des revendications précédentes, **caractérisé en ce que** le détecteur de niveau de remplissage (24) est agencé à une hauteur (h₂), qui correspond à la deuxième hauteur de remplissage, et un signal (s1) correspondant est généré lorsque le niveau de remplissage présente ou atteint cette hauteur, ou bien **en ce qu'**un détecteur de niveau de remplissage mesure les valeurs de hauteur des niveaux de remplissage, qui varient.

10. Procédé selon l'une au moins des revendications précédentes, **caractérisé en ce que** dans le moule creux (6), les contenants (2) en matière plastique sont remplis jusqu'à une hauteur (h1), et la hauteur de remplissage des contenants en matière plastique dont le remplissage est achevé, vaut au moins h₂, avec : h₁ < h₂.
